# FASCICULE DE BREVET EUROPEEN

(11) **EP 3 059 121 B1**
(45) Date de publication et mention de la délivrance du brevet: **01.12.2021**
(21) Numéro de dépôt: 16156341.6
(22) Date de dépôt: 18.02.2016
(51) Int. Cl.: B60Q 1/14

(54) **GÉNÉRATION ET TRAITEMENT DÉPORTÉ DE PHOTOMÉTRIE**
ERZEUGUNG UND FERNVERARBEITUNG VON PHOTOMETRIEDATEN
GENERATION AND REMOTE PROCESSING OF PHOTOMETRY

(30) Priorité: 20.02.2015 FR 1551472
(43) Date de publication de la demande: 24.08.2016
(73) Titulaire: VALEO VISION, 93012 Bobigny Cedex (FR)
(72) Inventeur: EL IDRISSI, Hafid, 93500 PANTIN (FR); BOINET, Loic, 76240 LE MESNIL ESNARD (FR)
(74) Mandataire: Valeo Visibility

(56) Documents cités:
- DE-A1- 19 911 901
- DE-A1-102008 062 640
- DE-A1-102013 016 904

## Description

L'invention se rapporte au domaine des dispositifs d'éclairage, en particulier pour véhicules automobiles.

Il est nécessaire de procurer aux conducteurs de véhicules, en particulier lors d'une circulation nocturne, un éclairage le mieux adapté possible aux conditions de circulation afin de réduire les risques d'accidents. En particulier, il est important que le conducteur puisse avoir une vision optimale de la route qui s'étend devant lui ainsi que des bas-côtés de cette route, sans toutefois éblouir les autres conducteurs ni les piétons.

Les véhicules automobiles comportent un dispositif d'éclairage de la route, utilisé en cas de visibilité insuffisante, par exemple le soir, la nuit ou lors d'intempéries. Classiquement, il existe sur les véhicules automobiles modernes plusieurs types d'éclairages, et notamment :
un éclairage dit "de route", réalisé au moyen de dispositifs d'éclairage qui émettent un faisceau lumineux dirigé vers l'horizon, et qui éclairent la scène de route intégralement sur une longue distance, d'environ 200 mètres,
un éclairage dit "de croisement", réalisé au moyen de dispositifs d'éclairage de croisement, ou codes, qui émettent un faisceau de lumière délimité par un plan de coupure supérieure, incliné d'environ 15° par rapport à l'horizontale et descendant, donnant au conducteur une visibilité sur une distance de l'ordre de 60 à 80 mètres; cette coupure supérieure descendante a pour but d'éviter d'éblouir les autres usagers présents dans la scène de route s'étendant devant le véhicule ou sur les bas-côtés de la route,
un éclairage dit " de brouillard ", utilisé en cas de visibilité réduite, réalisé au moyen de dispositifs d'éclairage qui émettent un faisceau de courte portée, de l'ordre de 40 mètres, limité vers le haut par un plan de coupure, très étalé latéralement et ne comportant pas de rayon montant susceptible de donner lieu à des phénomènes indésirables avec les gouttelettes de brouillard, et pour permettre au conducteur d'apprécier son environnement immédiat.

Les dispositifs d'éclairage qui viennent d'être évoqués, et plus particulièrement ceux qui sont utilisés comme feux de croisement, produisent des faisceaux lumineux qui sont perfectibles lorsque ces dispositifs projecteurs sont utilisés dans certaines conditions. On a ainsi élaboré de nouvelles fonctions, désignées comme fonctions élaborées et regroupées sous le nom d'AFS (abréviation pour "Advanced Frontlighting System" en anglais), qui proposent notamment d'autres types de faisceaux. Il s'agit notamment:
de la fonction dite BL (Bending Light en anglais pour éclairage de virage), qui peut se décomposer en une fonction dite DBL (Dynamic Bending Light en anglais) pour éclairage mobile de virage et une fonction dite FBL (Fixed Bending Light en anglais) pour éclairage fixe de virage. Ces fonctions d'éclairage de virage sont utilisées en cas de circulation en courbe, et sont réalisées au moyen de projecteurs qui émettent un faisceau lumineux dont l'orientation horizontale varie lorsque le véhicule se déplace sur une trajectoire incurvée, de façon à éclairer correctement les portions de route qui sont destinées à être abordées par le véhicule et qui se trouvent non pas dans l'axe du véhicule, mais dans la direction qu'il est sur le point d'emprunter, résultant de l'angle imprimé aux roues directrices du véhicule par son conducteur,
de la fonction dite Town Light en anglais, pour éclairage de ville; cette fonction assure l'élargissement d'un faisceau de type feu de croisement tout en diminuant légèrement sa portée,
de la fonction dite Motorway Light en anglais, pour éclairage d'autoroute, réalisant la fonction autoroute. Cette fonction assure une augmentation de la portée d'un feu de croisement en concentrant le flux lumineux du feu de croisement au niveau de l'axe optique du dispositif projecteur considéré,
de la fonction dite Overhead Light en anglais, pour feu de portique; cette fonction assure une modification d'un faisceau de feu de croisement de telle sorte que des portiques de signalisation situés au dessus de la route soient éclairés de façon satisfaisante au moyen des feux de croisement,
de la fonction dite AWL (Adverse Weather Light en anglais, pour feu de mauvais temps); cette fonction assure une modification d'un faisceau de feu de croisement de telle sorte que le conducteur d'un véhicule circulant en sens inverse ne soit pas ébloui par le reflet de la lumière des projecteurs sur la route mouillée.

De plus, lorsque l'éclairage de croisement est en fonction, l'assiette du véhicule peut subir des variations plus ou moins importantes, fonctions par exemple de la charge du véhicule, de son accélération ou de sa décélération, qui provoquent une variation de l'inclinaison de la coupure supérieure du faisceau, ayant pour résultat soit d'éblouir les autres conducteurs si la coupure se trouve relevée, soit d'éclairer insuffisamment la route si la coupure se trouve abaissée. Il est alors connu d'utiliser un correcteur de portée, à commande manuelle ou automatique, pour corriger l'orientation des projecteurs de croisement.

Hormis l'éclairage de route, les autres types d'éclairage, dans lesquels le faisceau de lumière est descendant, n'offrent qu'une visibilité réduite au conducteur du véhicule, à l'avant du véhicule. Ces éclairages sont souvent insuffisants pour permettre au conducteur d'appréhender l'ensemble de la scène de route afin de pouvoir anticiper d'éventuels obstacles ou des situations potentiellement dangereuses.

Pour pallier cet inconvénient, on a développé des dispositifs d'éclairage fournissant des faisceaux lumineux procurant au conducteur du véhicule équipé de ces dispositifs d'éclairage un éclairage comparable à celui d'un éclairage de route, mais dans lequel des zones d'ombres sont créées dans des directions dans lesquelles il n'est pas souhaitable d'émettre de la lumière, par exemple dans des directions dans lesquelles des véhicules ont été détectés, afin de ne pas en éblouir les conducteurs.

Ces faisceaux lumineux, connus sous les appellations anglo-saxonnes "Matrix Beam" ou "Pixel Lighting" selon la technologie utilisée, impliquent des conceptions complexes des dispositifs d'éclairage, et des réglages très fins pour obtenir le résultat voulu, c'est-à-dire des zones d'ombre variables aussi bien en dimensions qu'en direction.

Inversement, il est connu de proposer un faisceau d'éclairage dans lequel des zones de la scène de route contenant des détails notables sont éclairées avec une intensité lumineuse supérieure à celle de l'environnement de ces détails, pour attirer plus spécialement l'attention du conducteur du véhicule sur ces derniers.

Il est ainsi connu d'intégrer dans un dispositif d'éclairage un système digitalisé de projection matricielle. Il est alors possible, par exemple par des moyens informatiques, de projeter une image quelconque. Ceci permet notamment de supprimer du faisceau lumineux émis par le dispositif d'éclairage des sous parties qui auraient pour effet d'éblouir des personnes se situant dans le champ de projection du dispositif d'éclairage (piéton, conducteur d'un véhicule arrivant en sens inverse, etc.) mais aussi d'ajouter des informations (détails notables etc.).

Un système digitalisé de projection matricielle, nécessite un grand nombre d'informations afin d'être piloté. Il est notamment nécessaire de fournir une photométrie complète. Par photométrie on entend l'ensemble des points (pixels) décrivant l'image projetée, ensemble qui peut prendre la forme d'un fichier informatique comprenant une image.

La gestion de l'éclairage au sein d'un véhicule s'opère conventionnellement au niveau d'un calculateur centralisé, ce qui implique l'envoi d'un flux important de données entre ce calculateur centralisé et les actionneurs des dispositifs d'éclairage.

US2002196636A1 (Dassanayake et al) décrit un système de projection statique qui stocke chaque photométrie susceptible d'être projetée. Ceci manque de flexibilité (une modification dynamique de photométrie, en fonction du contexte, n'est pas prévue) et nécessite beaucoup de mémoire.

US2012044090A1, DE102006059064A1, EP1707438A1, EP1806531A1, EP2690352A1 ou encore US2004052083A1 décrivent des systèmes de projection qui eux aussi manquent de flexibilité et/ou nécessitent beaucoup de mémoire ou de bande passante. En particulier, la transmission de vidéos sur un bus d'un véhicule est susceptible de saturer ce bus et de ne pas laisser suffisamment de bande passante disponible pour d'autres applications.

DE 10 2006 062640 A1 décrit un dispositif d'éclairage, dans lequel un faisceau lumineux est généré par un actionneur avec une source lumineuse en modifiant une photométrie stockée dans l'actionneur selon un paramètre transmis par un calculateur.

L'invention vise donc à améliorer la situation.

Un aspect de l'invention concerne un procédé d'éclairage mis en œuvre par un dispositif d'éclairage comprenant :
- un actionneur stockant deux photométries ,
- un calculateur et
- une source lumineuse,
le procédé comprenant:
a) une définition, par le calculateur, d'un paramètre du dispositif d'éclairage,
b) une transmission de ce paramètre par le calculateur à l'actionneur,
c) une génération, par l'actionneur, avec la source lumineuse, d'un faisceau lumineux produisant une image correspondant à une photométrie obtenue en modifiant une photométrie stockée dans l'actionneur à l'aide du paramètre reçu de la part du calculateur,
f) une détection par l'actionneur, d'une panne éventuelle au sein du dispositif d'éclairage, et
g) en cas de détection d'une panne, une génération par l'actionneur avec la source lumineuse d'un faisceau lumineux produisant une image correspondant à une photométrie stockée dans l'actionneur.

Ce procédé est avantageux notamment en ce que seul un paramètre (par opposition à toutes les informations requises pour définir ce paramètre) est transmis, ce qui économise de la bande passante entre le calculateur et l'actionneur. Par ailleurs, les calculs au niveau de l'actionneur sont réduits car une photométrie pré-calculée y est stockée, et seule sa modification est effectuée (par opposition à un calcul complet de photométrie). Ceci permet de faire du calcul temps réel au niveau des actionneurs, sans nécessiter de composants très puissants. Enfin, le paramètre permet d'adapter dynamiquement la photométrie, sans être limité à un ensemble fixe de photométries stockées.

Un autre aspect de l'invention concerne un dispositif d'éclairage, comprenant :
- un actionneur stockant deux photométries,
- un calculateur agencé pour définir un paramètre du dispositif d'éclairage et pour transmettre ce paramètre à l'actionneur,
- une source lumineuse,

l'actionneur étant agencé pour générer, avec la source lumineuse, un faisceau lumineux produisant une image correspondant à une photométrie obtenue en modifiant une photométrie stockée dans l'actionneur à l'aide du paramètre,
l'actionneur étant agencé pour détecter une panne éventuelle au sein du dispositif d'éclairage, et pour générer, lorsqu'il détecte une telle panne, avec la source lumineuse un faisceau lumineux produisant une image correspondant à une photométrie stockée dans l'actionneur.

Les avantages du procédé d'éclairage précité s'appliquent à ce dispositif d'éclairage.

Un autre aspect de l'invention concerne un programme d'ordinateur comprenant une suite d'instructions qui conduisent le dispositif d'éclairage précité à exécuter les étapes du procédé précité de l'invention.

Un autre aspect de l'invention concerne un support de stockage non transitoire lisible par ordinateur, ledit support stockant le programme d'ordinateur précité de l'invention.

D'autres aspects, buts et avantages de l'invention apparaîtront à la lecture de la description de quelques uns de ses modes de réalisation.

L'invention sera également mieux comprise à l'aide des dessins, sur lesquels :
- la figure 1 illustre de manière schématique un dispositif d'éclairage selon un mode de réalisation possible de l'invention;
- la figure 2 illustre de manière schématique un procédé d'éclairage selon un mode de réalisation possible de l'invention.

Selon l'invention, un procédé d'éclairage est mis en œuvre par un dispositif d'éclairage HL (de l'anglais headlamp), par exemple un phare d'automobile.

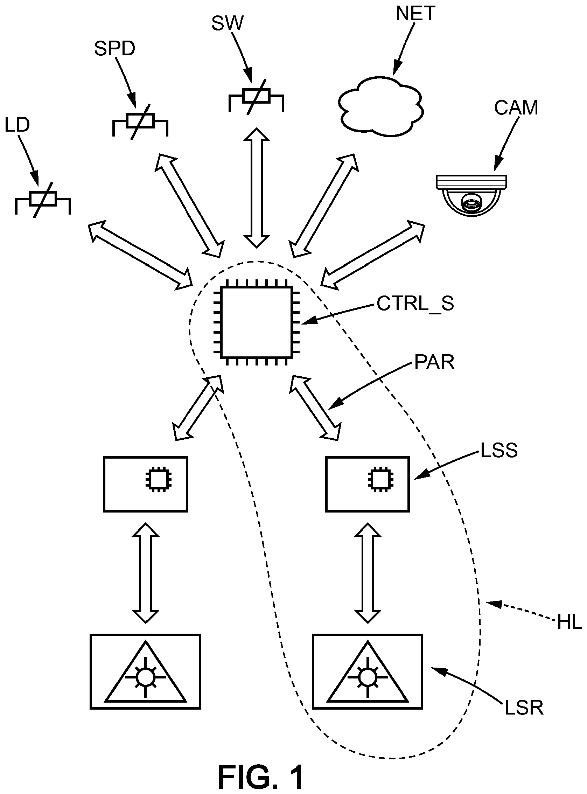

Le dispositif d'éclairage comprend un actionneur stockant deux photométries au moins (rien n'exclut qu'il en stocke davantage). Cet actionneur est par exemple un système à balayage laser LSS (de l'anglais Laser Scanning System), comme représenté schématiquement sur la figure 1. Un tel système est décrit dans la demande EP2690352A1 du même déposant. Un laser peut ainsi éclairer un miroir tournant qui, selon les commandes reçues, atteint un bloc de matériau luminescent, également dénommé convertisseur de lumière et usuellement désigné sous l'appellation générique phosphore, en différents endroits. C'est ce convertisseur de lumière, qui comprend au moins un matériau luminescent conçu pour absorber au moins une partie d'au moins une lumière d'excitation émise par une source lumineuse et pour convertir au moins une partie de ladite lumière d'excitation absorbée en une lumière d'émission ayant une longueur d'onde différente de celle de la lumière d'excitation., qui brille sous l'effet du laser, qui crée le faisceau lumineux finalement émis.

Mais l'actionneur peut également être un système pilotant une matrice de LEDs (diodes électroluminescentes). Différentes technologies permettent ainsi de projeter une image quelconque.

Le dispositif d'éclairage peut évidemment comprendre plusieurs actionneurs.

Les deux photométries au moins stockées dans l'actionneur subissent avantageusement, au préalable, un traitement pour réduire les calculs temps réel ultérieurs.

Une première photométrie est par exemple une photométrie "classique" telle qu'une photométrie LB (de l'anglais low beam, correspondant à la fonction code ou feu de croisement) au niveau de l'actionneur. Ceci permet d'assurer un mode sécurisé en cas de panne (par exemple en cas de perte de communication entre le calculateur et l'actionneur), comme cela sera exposé ci-dessous.

Une deuxième photométrie est par exemple une photométrie non conventionnelle à partir de laquelle il est aisé de modeler un grand nombre de photométries, à l'aide de masques que l'actionneur applique directement sur cette photométrie en fonction des paramètres transmis par le calculateur. Avantageusement, il s'agit d'une photométrie correspondant à un feu de route. Ainsi, on fait transiter un simple flux de données au lieu d'envoyer une information d'image qui nécessiterait des moyens beaucoup plus lourds et coûteux.

D'autres photométries peuvent être stockées dans l'actionneur, par exemple pour s'adapter à la conduite à droite ou à gauche, ou pour un scénario d'accueil lors de l'ouverture du véhicule, avec par exemple la projection du logo du constructeur du véhicule ou d'une message d'accueil personnalisé.

On comprend bien que l'avantage principal de l'invention est qu'à partir de seulement deux photométries stockées, on peut réaliser l'ensemble des faisceaux lumineux souhaités, avec très peu de ressources en mémoire de stockage et de consommation de bande passante. Ainsi, dans le cas de figure d'adaptation du feu de croisement à la conduite à gauche ou à droite, la première photométrie LB de feu de croisement qui comporte une coupure inclinée correspondant à un coté de conduite donné, par exemple à droite, permet de générer un faisceau de feu de croisement adapté à l'autre coté de conduite par simple projection en image miroir de cette première photométrie LB stockée.

Dans le cadre de l'invention, l'actionneur pourra stocker de 2 à 10 photométries différentes. De préférence, l'actionneur stocke jusqu'à 5 photométries, borne incluse. De façon plus préférée, l'actionneur stocke deux ou trois photométries et encore plus préférentiellement, l'actionneur stocke deux photométries.

L'actionneur comprend un circuit électronique (tel qu'un ensemble comprenant un microprocesseur et une mémoire stockant un programme informatique adapté, ou encore tel qu'un circuit électronique sur mesure comme un FPGA). Ce circuit électronique permet de piloter l'actionneur (en définissant par exemple un balayage approprié d'un rayon laser, ou en pilotant un allumage approprié des diodes d'une matrice de diodes).

Le dispositif d'éclairage comprend un calculateur CTRL_S (de l'anglais Control System). Ce calculateur est un circuit électronique, par exemple un ensemble comprenant un microprocesseur et une mémoire stockant un programme informatique adapté. Alternativement, ce calculateur est par exemple un circuit électronique sur mesure tel qu'un FPGA.

Le dispositif d'éclairage comprend une (ou plusieurs) source(s) lumineuse(s), telle qu'un laser LSR, ou encore une matrice de diodes.

Le procédé d'éclairage comprend une définition a, par le calculateur CTRL_S, d'un paramètre PAR du dispositif d'éclairage HL. Rien n'exclut que le paramètre PAR comprenne plusieurs sous paramètres. Selon une mise en œuvre possible, cette définition résulte du traitement d'un certain nombre de données d'entrées. Le calculateur décharge ainsi l'actionneur de tous ces traitements (ne nécessitant ainsi qu'une puissance de calcul plus faible au sein de l'actionneur) et réduit la bande passante requise entre le calculateur et l'actionneur (seul le paramètre, et non toutes les données d'entrée, étant transmis).

Le procédé d'éclairage comprend une transmission b de ce paramètre PAR par le calculateur CTRL_S à l'actionneur LSS.

Le procédé d'éclairage comprend une génération c, par l'actionneur, avec la source lumineuse, d'un faisceau lumineux produisant une image correspondant à une photométrie obtenue en modifiant une photométrie stockée dans l'actionneur à l'aide du paramètre reçu de la part du calculateur.

Le procédé peut ainsi moduler l'intensité du laser pour ne pas éclairer certaines zones. Il peut également, dans le cadre d'une utilisation d'une matrice de LEDs, commander l'extinction progressive des LEDs à la sortie d'un tunnel, etc.

Il est ainsi possible de limiter les calculs en temps réel aux seules fonctionnalités dynamiques (identifiées par les paramètres reçus), la majeure partie des photométries stockées n'étant pas affectée.

Selon un premier mode de réalisation particulier, le procédé d'éclairage comprend une analyse d1, par le calculateur CTRL_S, d'un flux vidéo capté par une caméra CAM connectée au calculateur. Le calculateur peut ainsi chercher à identifier, dans la scène filmée par la caméra CAM, d'éventuels véhicules arrivant en face (par exemple en repérant leurs phares allumés), ou encore des piétons.

Le procédé d'éclairage comprend une définition e1, par le calculateur CTRL_S, du paramètre PAR en fonction du résultat de cette analyse. Le paramètre PAR peut ainsi être constitué d'un masque. Ce masque, transmis à l'actionneur, lui permet par exemple de masquer une partie de la photométrie qui risquerait d'éblouir des véhicules arrivant en face. L'actionneur peut ainsi, à partir d'un fichier image stocké (contenant une photométrie) générer un autre fichier image (photométrie modifiée par ajout d'un masque).

Un masque permet également, selon une mise en œuvre possible, d'incruster des informations pertinentes dans l'image. Par exemple, lorsque la navigation du véhicule est assistée par un système de géolocalisation tel que le GPS, le masque peut servir à faire apparaître en surbrillance sur la route une flèche (ou d'autres types d'informations) indiquant la direction à suivre. Le paramètre dépend alors non seulement de l'image captée par la caméra mais aussi de données autres (informations provenant d'un GPS).

Ce premier mode de réalisation permet d'éviter de transmettre un flux vidéo haut débit, et de transmettre à sa place de simples paramètres ne nécessitant qu'un bas débit.

Par haut débit, on entend un débit d'un ordre de grandeur au moins dix fois supérieur à un bas débit (dans l'absolu, les notions de haut et bas débit peuvent varier, d'où une définition relative de ces notions).

Selon un deuxième mode de réalisation particulier, le procédé d'éclairage HL comprend une réception d2, par le calculateur CTRL_S, d'une mesure effectuée par un capteur connecté au calculateur. Le capteur est par exemple un capteur SW (de l'anglais steering wheel) connecté à un volant et en mesurant la rotation, ou un capteur LD (de l'anglais load) mesurant la charge du véhicule, ou un capteur SPD (de l'anglais speed) mesurant la vitesse du véhicule. Le capteur peut être constitué d'une combinaison de capteurs et renvoyer une combinaison d'informations (issues respectivement de chaque capteur de la combinaison).

Le procédé d'éclairage comprend une définition e2, par le calculateur CTRL_S, du paramètre PAR en fonction de cette mesure reçue. Par exemple, une mesure de virage à gauche (respectivement à droite) via un capteur SW peut être traduit par un paramètre PAR indiquant une translation horizontale vers la gauche (respectivement vers la droite) de la photométrie afin que le dispositif d'éclairage continue à éclairer la route malgré le virage (et non le bas côté droit, respectivement gauche). De même, une répartition de la charge mesurée par le capteur LD ou une mesure d'accélération ou de décélération perçue grâce au capteur SPD permet d'indiquer que l'assiette du véhicule change et peut être traduit par la définition d'un paramètre PAR indiquant une translation vers le haut ou vers le bas de la photométrie (de façon à compenser l'assiette).

Le paramètre PAR peut intégrer des sous-paramètres issus de différents capteurs (tels que les capteurs SW, SPD et LD précités) ainsi que des sous-paramètres issus d'une analyse d'image prise par une caméra (comme indiqué dans le second mode de réalisation précité), ainsi que d'autres sous-paramètres encore.

Selon l'invention, le procédé d'éclairage HL comprend une détection f, par l'actionneur LSS, d'une panne éventuelle au sein du dispositif d'éclairage HL.

L'actionneur peut ainsi comprendre un circuit électronique de détection d'erreur, qui est par exemple un ensemble comprenant un microprocesseur et une mémoire stockant un programme informatique adapté. Alternativement, ce circuit électronique de détection d'erreur est par exemple un circuit électronique sur mesure tel qu'un FPGA. Ce circuit permet par exemple de détecter que les paramètres reçus du calculateur sont incohérents, ou encore que la connexion avec le calculateur n'est plus fiable.

Le procédé d'éclairage comprend, en cas de détection d'une panne, une génération g par l'actionneur d'un faisceau lumineux produisant une image correspondant à une photométrie stockée dans l'actionneur. Il s'agit de préférence d'une photométrie correspondant à la fonction code, sans corrections. Ainsi, on évite d'éblouir les autres usagers, mais (vraisemblablement) au prix d'un éclairage sous optimal.

Selon un aspect de l'invention, un programme d'ordinateur comprend une suite d'instructions qui, conduisent le dispositif d'éclairage à exécuter les étapes du procédé selon l'invention. Ce programme d'ordinateur peut être écrit par exemple dans un langage de haut niveau tel que le langage C ou dans un langage de plus bas niveau tel qu'un langage assembleur.

Selon un autre aspect de l'invention, un support de stockage non transitoire lisible par ordinateur stocke un tel programme d'ordinateur. Ce support de stockage est par exemple une mémoire du dispositif d'éclairage, telle qu'une mémoire de type non volatile (EEPROM, ROM, Flash, etc.).

Selon l'invention, un dispositif d'éclairage HL comprend un actionneur LSS stockant deux photométries.

Le dispositif d'éclairage comprend un calculateur CTRL_S agencé pour définir un paramètre PAR du dispositif d'éclairage HL et pour transmettre ce paramètre PAR à l'actionneur LSS.

Le dispositif d'éclairage comprend une source lumineuse LSR.

L'actionneur LSS est agencé pour générer, avec la source lumineuse LSR, un faisceau lumineux produisant une image correspondant à une photométrie obtenue en modifiant une photométrie stockée dans l'actionneur LSS à l'aide du paramètre PAR.

Selon un troisième mode de réalisation particulier, le calculateur CTRL_S du dispositif d'éclairage HL est agencé pour analyser un flux vidéo capté par une caméra CAM connectée au calculateur CTRL_S et pour définir le paramètre PAR en fonction du résultat de cette analyse.

Selon un quatrième mode de réalisation particulier, le calculateur CTRL_S du dispositif d'éclairage HL est agencé pour définir le paramètre PAR en fonction d'une mesure effectuée par un capteur SW, LD, SPD connecté au calculateur CTRL_S.

Selon l'invention, l'actionneur LSS du dispositif d'éclairage HL est agencé pour détecter une panne éventuelle au sein du dispositif d'éclairage HL, et pour générer, lorsqu'il détecte une telle panne, avec la source lumineuse, un faisceau lumineux produisant une image correspondant à une photométrie stockée dans l'actionneur LSS.

La figure 1 montre de manière schématique un dispositif d'éclairage HL selon un mode de réalisation possible. Ce dispositif d'éclairage (un ensemble de deux phares d'automobile) comprend un calculateur CTRL_S, qui est en l'occurrence partagé pour les deux phares. Ce partage permet de mutualiser la puissance de calcul. Le dispositif d'éclairage comprend deux actionneurs LSS identiques associés respectivement au phare avant gauche et au phare avant droit d'une automobile. Le dispositif d'éclairage HL comprend deux sources lumineuses identiques (deux lasers LSR, un pour le phare gauche et un pour le phare droit).

Le dispositif d'éclairage HL est connecté à une (seule) caméra CAM (mutualisée pour les deux phares), qui est agencée pour mesurer le champ devant le véhicule afin de repérer les points lumineux et en fonction de ces points lumineux déterminer où il y a des véhicules à ne pas éblouir. Chaque actionneur peut déduire son propre champ visuel par changement de référentiel par rapport à la mesure de la caméra (cela évite ainsi une double caméra). Cependant, il est également possible de prévoir autant de caméras qu'il y a de phares.

Chaque phare comprend, de façon conventionnelle, son propre système optique ("optical module" en anglais), non représenté, permettant d'adapter son faisceau lumineux.

Le dispositif d'éclairage HL est également connecté à un capteur SW, à un capteur LD et à un capteur SPD, ainsi qu'à un réseau automobile NET. Le calculateur CTRL_S est agencé pour analyser les informations issues de ces différents capteurs et de la caméra CAM afin de générer un paramètre PAR transmis à un actionneur LSS respectif.

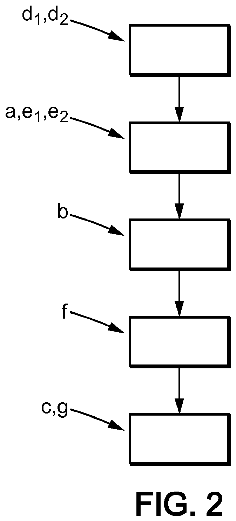

La figure 2 montre de manière schématique différentes étapes d'un procédé selon un mode de réalisation. Le procédé commence par une étape d1 (analyse de flux vidéo) et/ou d2 (réception de mesure de capteur). Le procédé se poursuit (étapes a, e1, et/ou e2) par la détermination d'un paramètre en fonction des éléments précédemment reçus (étape d1/d2). Vient alors l'étape b de transmission du (ou des) paramètre(s) déterminé(s). Puis, à une étape f, l'actionneur détecte le cas échéant une panne. A l'étape suivante, s'il n'y a pas eu de panne, l'étape c (génération, par l'actionneur LSS, avec la source lumineuse (LSR), d'un faisceau lumineux dépendant du paramètre PAR) peut être mise en œuvre, sinon c'est une photométrie par défaut qui est sélectionnée par sécurité (fonction code par exemple).

Bien entendu, la présente invention ne se limite pas aux formes de réalisation décrites ci-avant à titre d'exemples.

Notamment, le dispositif d'éclairage peut être utilisé par tout type de véhicule, y compris des motocyclettes, des aéronefs ou encore des navires.

## Revendications

1. Procédé d'éclairage mis en œuvre par un dispositif d'éclairage (HL) comprenant:
- un actionneur (LSS) stockant deux photométries,
- un calculateur (CTRL_S) et
- une source lumineuse (LSR),
le procédé comprenant:
a) une définition, par le calculateur (CTRL_S), d'un paramètre (PAR) du dispositif d'éclairage (HL),
b) une transmission de ce paramètre (PAR) par le calculateur (CTRL_S) à l'actionneur (LSS),
c) une génération, par l'actionneur (LSS), avec la source lumineuse (LSR), d'un faisceau lumineux produisant une image correspondant à une photométrie obtenue en modifiant une photométrie stockée dans l'actionneur (LSS) à l'aide du paramètre (PAR) reçu de la part du calculateur (CTRL_S),
**caractérisé en ce que** le procédé comprend
f) une détection, par l'actionneur (LSS), d'une panne éventuelle au sein du dispositif d'éclairage (HL),
g) en cas de détection d'une panne, une génération par l'actionneur (LSS) avec la source lumineuse (LSR) d'un faisceau lumineux produisant une image correspondant à une photométrie stockée dans l'actionneur (LSS).

2. Procédé d'éclairage selon la revendication 1, comprenant:
d1) une analyse, par le calculateur (CTRL_S), d'un flux vidéo capté par une caméra (CAM) connectée au calculateur (CTRL_S),
e1) une définition, par le calculateur (CTRL_S), du paramètre (PAR) en fonction du résultat de cette analyse.

3. Procédé d'éclairage (HL) selon la revendication 1 ou 2, comprenant:
d2) une réception par le calculateur (CTRL_S) d'une mesure effectuée par un capteur (SW, LD, SPD) connecté au calculateur (CTRL_S)
e2) une définition, par le calculateur (CTRL_S), du paramètre (PAR) en fonction de cette mesure.

4. Dispositif d'éclairage (HL), comprenant :
- un actionneur (LSS) stockant deux photométries,
- un calculateur (CTRL_S) agencé pour définir un paramètre (PAR) du dispositif d'éclairage (HL) et pour transmettre ce paramètre (PAR) à l'actionneur (LSS),
- une source lumineuse (LSR),
l'actionneur (LSS) étant agencé pour générer, avec la source lumineuse (LSR), un faisceau lumineux produisant une image correspondant à une photométrie obtenue en modifiant une photométrie stockée dans l'actionneur (LSS) à l'aide du paramètre (PAR), **caractérisé en ce que**
l'actionneur (LSS) est agencé pour détecter une panne éventuelle au sein du dispositif d'éclairage (HL), et pour générer, lorsqu'il détecte une telle panne, avec la source lumineuse (LSR) un faisceau lumineux produisant une image correspondant à une photométrie stockée dans l'actionneur (LSS).

5. Dispositif d'éclairage (HL) selon la revendication 4, le calculateur (CTRL_S) étant agencé pour analyser un flux vidéo capté par une caméra (CAM) connectée au calculateur (CTRL_S) et pour définir le paramètre (PAR) en fonction du résultat de cette analyse.

6. Dispositif d'éclairage (HL) selon la revendication 4 ou 5, le calculateur (CTRL_S) étant agencé pour définir le paramètre (PAR) en fonction d'une mesure effectuée par un capteur (SW, LD, SPD) connecté au calculateur (CTRL_S).

7. Programme d'ordinateur comprenant une suite d'instructions qui conduisent le dispositif d'éclairage (HL) selon l'une des revendications 4 à 6 à exécuter les étapes du procédé selon l'une des revendications 1 à 3.

8. Support de stockage non transitoire lisible par ordinateur, ledit support stockant un programme d'ordinateur selon la revendication 7.

## Patentansprüche

1. Beleuchtungsverfahren, das durch eine Beleuchtungsvorrichtung (HL) umgesetzt wird, die Folgendes beinhaltet:
- einen Aktor (LSS), der zwei Photometrien speichert,
- eine Recheneinheit (CTRL_S) und
- eine Lichtquelle (LSR),
wobei das Verfahren Folgendes beinhaltet:
a) Definieren, durch die Recheneinheit (CTRL_S), eines Parameters (PAR) der Beleuchtungsvorrichtung (HL),
b) Übertragen dieses Parameters (PAR) durch die Recheneinheit (CTRL_S) an den Aktor (LSS),
c) Erzeugen, durch den Aktor (LSS), mit der Lichtquelle (LSR), eines Lichtstrahls, der ein Bild produziert, das einer Photometrie entspricht, die durch das Verändern einer in dem Aktor (LSS) gespeicherten Photometrie mit Hilfe des von der Recheneinheit (CTRL_S) empfangenen Parameters (PAR) erhalten wird,
**dadurch gekennzeichnet, dass** das Verfahren Folgendes beinhaltet:
f) Erkennen, durch den Aktor (LSS), einer möglichen Störung innerhalb der Beleuchtungsvorrichtung (HL),
g) im Fall des Erkennens einer Panne, Erzeugen, durch den Aktor (LSS) mit der Lichtquelle (LSR), eines Lichtstrahls, der ein Bild produziert, das einer in dem Aktor (LSS) gespeicherten Photometrie entspricht.

2. Beleuchtungsverfahren nach Anspruch 1, das Folgendes beinhaltet:
d1) Analysieren, durch die Recheneinheit (CTRL_S), eines Video-Streams, der von einer mit der Recheneinheit (CTRL_S) verbundenen Kamera (CAM) erfasst wird,
e1) Definieren, durch die Recheneinheit (CTRL_S), des Parameters (PAR) in Abhängigkeit von dem Ergebnis dieser Analyse.

3. Beleuchtungsverfahren (HL) nach Anspruch 1 oder 2, das Folgendes beinhaltet:
d2) Empfangen, durch die Recheneinheit (CTRL_S), einer Messung, die von einem mit der Recheneinheit (CTRL_S) verbundenen Sensor (SW, LD, SPD) durchgeführt wird,
e2) Definieren, durch die Recheneinheit (CTRL_S), des Parameters (PAR) in Abhängigkeit von dieser Messung.

4. Beleuchtungsvorrichtung (HL), die Folgendes beinhaltet:
- einen Aktor (LSS), der zwei Photometrien speichert,
- eine Recheneinheit (CTRL_S), die dazu angeordnet ist, einen Parameter (PAR) der Beleuchtungsvorrichtung (HL) zu definieren und diesen Parameter (PAR) an den Aktor (LSS) zu übertragen,
- eine Lichtquelle (LSR),
wobei der Aktor (LSS) dazu angeordnet ist, mit der Lichtquelle (LSR) einen Lichtstrahl zu erzeugen, der ein Bild produziert, das einer Photometrie entspricht, die durch das Verändern einer in dem Aktor (LSS) gespeicherten Photometrie mit Hilfe des Parameters (PAR) erhalten wird,
**dadurch gekennzeichnet, dass** der Aktor (LSS) dazu angeordnet ist, eine mögliche Störung innerhalb der Beleuchtungsvorrichtung (HL) zu erkennen und, wenn er eine solche Störung erkennt, mit der Lichtquelle (LSR) einen Lichtstrahl zu erzeugen, der ein Bild produziert, das einer in dem Aktor (LSS) gespeicherten Photometrie entspricht.

5. Beleuchtungsvorrichtung (HL) nach Anspruch 4, wobei die Recheneinheit (CTRL_S) dazu angeordnet ist, einen Video-Stream, der von einer mit der Recheneinheit (CTRL_S) verbundenen Kamera (CAM) erfasst wird, zu analysieren und den Parameter (PAR) in Abhängigkeit von dem Ergebnis dieser Analyse zu definieren.

6. Beleuchtungsvorrichtung (HL) nach Anspruch 4 oder 5, wobei die Recheneinheit (CTRL_S) dazu angeordnet ist, den Parameter (PAR) in Abhängigkeit von einer Messung, die von einem mit der Recheneinheit (CTRL_S) verbundenen Sensor (SW, LD, SPD) durchgeführt wird, zu definieren.

7. Computerprogramm, das eine Folge von Anweisungen beinhaltet, die bewirken, dass die Beleuchtungsvorrichtung (HL) nach einem der Ansprüche 4 bis 6 die Schritte des Verfahrens nach einem der Ansprüche 1 bis 3 ausführt.

8. Computerlesbares, nichttransitorisches Speichermedium, wobei das Medium ein Computerprogramm nach Anspruch 7 speichert.

## Claims

1. Lighting method implemented by a lighting device (HL) comprising:
- an actuator (LSS) storing two light maps;
- a control system (CTRL_S); and
- a light source (LSR),
the method comprising:
a) definition, by the control system (CTRL_S), of a parameter (PAR) of the lighting device (HL);
b) transmission of this parameter (PAR) by the control system (CTRL_S) to the actuator (LSS);
c) generation, by the actuator (LSS), with the light source (LSR), of a light beam producing an image corresponding to a light map obtained by modifying a light map stored in the actuator (LSS) using the parameter (PAR) received from the control system (CTRL_S),
**characterized in that** the method comprises :
f) detection, by the actuator (LSS), of a possible malfunction in the lighting device (HL);
g) in case of detection of a malfunction, generation, by the actuator (LSS), with the light source (LSR), of a light beam producing an image corresponding to a light map stored in the actuator (LSS).

2. Lighting method according to Claim 1, comprising:
d1) analysis, by the control system (CTRL_S), of a video stream captured by a video camera (CAM) connected to the control system (CTRL_S); and
e1) definition, by the control system (CTRL_S), of the parameter (PAR) depending on the result of this analysis.

3. Lighting method (HL) according to Claim 1 or 2, comprising:
d2) reception, by the control system (CTRL_S), of a measurement taken by a sensor (SW, LD, SPD) connected to the control system (CTRL_S); and
e2) definition, by the control system (CTRL_S), of the parameter (PAR) depending on this measurement.

4. Lighting device (HL), comprising:
- an actuator (LSS) storing two light maps;
- a control system (CTRL_S) arranged to define a parameter (PAR) of the lighting device (HL) and to transmit this parameter (PAR) to the actuator (LSS); and
- a light source (LSR),
the actuator (LSS) being arranged to generate, with the light source (LSR), a light beam producing an image corresponding to a light map obtained by modifying a light map stored in the actuator (LSS) using the parameter (PAR) **characterized in that.**
the actuator (LSS) is arranged to detect a possible malfunction in the lighting device (HL), and to generate, when it detects such a malfunction, with the light source (LSR), a light beam producing an image corresponding to a light map stored in the actuator (LSS).

5. Lighting device (HL) according to Claim 4, the control system (CTRL_S) being arranged to analyze a video stream captured by a video camera (CAM) connected to the control system (CTRL_S) and to define the parameter (PAR) depending on the result of this analysis.

6. Lighting device (HL) according to Claim 4 or 5, the control system (CTRL_S) being arranged to define the parameter (PAR) depending on a measurement taken by a sensor (SW, LD, SPD) connected to the control system (CTRL_S).

7. Computer program comprising a set of instructions that lead the lighting device (HL) according to one of claims 4 to 6 to implement a method according to one of Claims 1 to 3.

8. Non-transient computer-readable storage medium, said medium storing a computer program according to Claim 7.
